## Europäisches Patentamt
## European Patent Office
## Office européen des brevets

(19)

(11) Numéro de publication: **0 069 644**
**B1**

(12)

# FASCICULE DE BREVET EUROPEEN

(45) Date de publication du fascicule du brevet:
**03.10.84**

(51) Int. Cl.³: **C 01 B 25/30**

(21) Numéro de dépôt: **82401186.0**

(22) Date de dépôt: **28.06.82**

(54) **Nouvel orthophosphate de sodium, procédé pour son obtention.**

(30) Priorité: **06.07.81 FR 8113223**

(43) Date de publication de la demande:
**12.01.83 Bulletin 83/2**

(45) Mention de la délivrance du brevet:
**03.10.84 Bulletin 84/40**

(84) Etats contractants désignés:
**AT BE CH DE FR GB IT LI LU NL SE**

(56) Documents cités:
**BE - A - 792 755**
**DE - A - 2 231 507**
**FR - A - 2 257 326**
**FR - A - 2 431 321**
**US - A - 3 233 967**

(73) Titulaire: **RHONE-POULENC CHIMIE DE BASE, 25, quai Paul Doumer, F-92408 Courbevoie (FR)**

(72) Inventeur: **Bourgeois, Jean-Paul, 17 Villa du Petit Parc, F-94000 Creteil (FR)**
Inventeur: **Couffin, Frédéric, 8bis, rue Pierre Corneille, F-91230 Montgeron (FR)**
Inventeur: **Magnier, Claude, 3, rue des Chaufourniers, F-75019 Paris (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

## Description

La présente invention a trait à un nouveau produit constitué par un nouvel orthophosphate de sodium. Elle a également trait au procédé pour l'obtenir.

Un procédé connu en vue de la préparation de tripolyphosphate de sodium consiste à sécher une solution d'orthophosphates contenant approximativement 5 mol de $Na_2O$ pour 3 mol de $P_2O_5$.

Il est connu que les orthophosphates solides précurseurs du TPP $Na_5P_3O_{10}$ obtenus soit en four tournant, soit en atomiseur, sont formés respectivement de mélanges plus ou moins intimes de $NaH_2PO_4$ et de $Na_2HPO_4$ d'une part, de $Na_3H_3(PO_4)_2$ et de $Na_2HPO_4$ d'autre part.

Les calcinations de ces mélanges d'orthophosphates conduisent, suivant les procédés, à divers pyrophosphates $(Na_2H_2P_2O_7 + Na_4P_2O_7$ ou $Na_3HP_2O_7 + Na_4P_2O_7)$ sous forme cristalline ou amorphe. Le TPP est alors obtenu par la thermocondensation de ces mélanges de pyrophosphates. Il est donc évident que les impuretés phosphatées accompagnant généralement le TPP (pyro neutre, polyphosphates solubles ou insolubles) sont dues aux ségrégations des orthophosphates ou des pyrophosphates qui sont liées aux procédés mis en œuvre.

A la connaissance de la titulaire, quels que soient les procédés, le mélange obtenu après séchage est toujours composé d'au moins deux entités cristallines bien connues et répertoriées dans le diagramme d'équilibre $Na_2O/P_2O_5/H_2O$.

De manière surprenante, la titulaire a isolé un nouveau produit comprenant une seule phase cristalline de rapport Na/P sensiblement égal à 5/3.

On peut attribuer à ce nouveau produit la formule suivante: $Na_5H_4(PO_4)_3$.

Par ailleurs, son spectre aux rayons X est le suivant, mesuré par diffractométrie par réflexion.

| N° raie | dÅ |
|---------|------|
| 1 | 8,9 |
| 2 | 5,35 |
| 3 | 4,68 |
| 4 | 4,63 |
| 5 | 3,85 |
| 6 | 3,81 |
| 7 | 3,75 |
| 8 | 3,67 |
| 9 | 3,66 |
| 10 | 3,33 |
| 11 | 3,28 |
| 12 | 3,38 |
| 13 | 3,15 |
| 14 | 2,77 |
| 15 | 2,72 |
| 16 | 2,71 |
| 17 | 2,68 |
| 18 | 2,64 |
| 19 | 2,54 |

Le produit selon l'invention peut en particulier être obtenu selon le procédé qui consiste:

a) à préparer une solution d'orthophosphates de sodium mono- et disodique de manière que le rapport Na/P global soit égal sensiblement à $1,667 \pm 0,01$ ;

b) à former un écoulement puits-tourbillon avec une phase gazeuse chaude à grande quantité de mouvement;

c) à introduire ladite solution d'orthophosphates dans la zone de dépression de l'écoulement puits-tourbillon, de manière à provoquer la dispersion de ladite solution d'orthophosphates par la phase gazeuse et sa cristallisation.

Pratiquement, on impartit à l'écoulement puits-tourbillon une quantité de mouvement à la phase gazeuse d'au moins 100 fois supérieure par rapport à la solution d'orthophosphates, de préférence de 1000 à 10000 fois supérieure.

De plus, on donne une faible vitesse à la solution (inférieure à 10 m/s) et une pression faible sur le gaz (inférieure à $10^5$ Pa).

Enfin, on règle le profil de température de la réaction de cristallisation par la phase gazeuse.

Pratiquement, dans le procédé selon l'invention, l'écoulement gazeux puits-tourbillon et la phase liquide forment, à partir du contact des phases, trois zones successives et se succédant dans l'espace sans discontinuité, à savoir:

a) une zone très courte de dispersion;

b) une zone dans laquelle les éléments de volume du gaz et les gouttelettes de liquide forment des couples gaz-liquide le long des trajectoires imposées par le gaz et selon un écoulement sensiblement piston;

c) une zone isotherme.

Selon l'invention, on doit provoquer tout l'échange thermique entre les phases et la cristallisation dans la zone b.

Pour cela, la température dans la zone c doit être assez faible, dè l'ordre de 100 à 160°C, de préférence comprise entre 120 et 130°C.

Par contre, la température d'entrée des gaz doit être asez élevée, puisqu'il faut dans cette zone enlever toute l'eau de la solution. Sa détermination dépend des autres conditions de marche du procédé, mais elle est de plusieurs centaines de degrés supérieure à la température de la zone isotherme, et avantageusement de 400 à 600°C supérieure à cette dernière dans des conditions classiques de fonctionnement.

En opérant comme dit précédemment, on obtient une répartition homogène des gouttes de solution. Les conditions thermodynamiques du système sont telles que toute évolution parasite est empêchée, et la composition du solide reste identique à celle du liquide lors de la cristallisation. Il s'agit là d'un résultat tout à fait nouveau et inattendu.

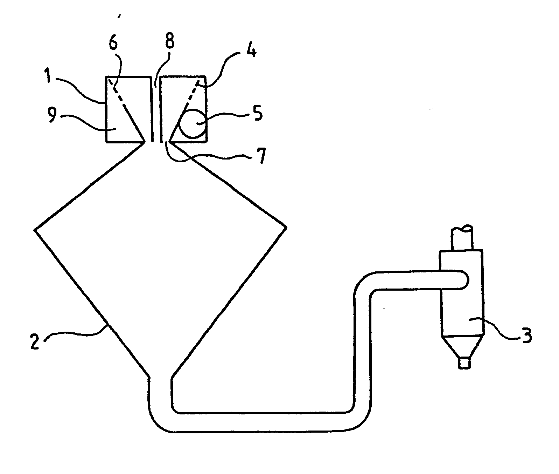

L'installation utilisée est schématisée à la figure en annexe.

Elle comprend une tête de dispersion 1, un bicône de réception 2 et un cyclone 3.

La tête présente un panier perforé 4 définissant un espace annulaire 9 dans lequel débouche une entrée tangentielle 5. Cet espace permet de réaliser l'écoulement puits-tourbillon symétrique grâce à des orifices tels que 6 et au col 7.

La phase à traiter est introduite par un conduit axial 8 de manière à la conduire jusque dans la zone de dépression du puits-tourbillon, c'est-à-dire dans la partie amont du bicône 2.

Les gaz de traitement sont amenés chauds dans l'espace annulaire.

*Exemple:*

Une solution contenant 15,8% de $P_2O_5$ et 11,5% de $Na_2O$ (Na/P=1,667), maintenue à 40°C, est pulvérisée avec un débit de 10 l/h dans un gaz chaud (température 640°C; 50 $Nm^3$/h) où elle subit un séchage par effet flash. La température de sortie des gaz et du produit solide est de 145°C. L'analyse chromatographique met en évidence la présence exclusive d'orthophosphate, et les spectres RX et IR montrent que cette phase cristalline n'est en aucun cas un mélange de deux phases telles que $NaH_2PO_4$, $Na_3H_3(PO_4)_2$. Le rapport Na/P dosé par potentiométrie est égal à 1,663. On peut donc attribuer à ce nouvel ortho-phosphate la formule $Na_5H_4(PO_4)_3$. Le tableau ci-dessous donne la liste des distances réticulaires et intensités de raie obtenues par diffractométrie (générateur Siemens K 805, rayonnement mo-nochromatique CuKα; compteur proportionnel); elles permettent de caractériser sans ambiguïté ce produit.

| No raie | dÅ | Intensités estimées |
|---|---|---|
| 1 | 8,9 | ttf |
| 2 | 5,35 | tf |
| 3 | 4,68 | f |
| 4 | 4,63 | f |
| 5 | 3,85 | m |
| 6 | 3,81 | mf |
| 7 | 3,75 | m |
| 8 | 3,67 | mF |
| 9 | 3,66 | m |
| 10 | 3,63 | m |
| 11 | 3,33 | tf |
| 12 | 3,28 | mf |
| 13 | 3,15 | tf |
| 14 | 2,77 | F |
| 15 | 2,72 | mF |
| 16 | 2,71 | m |
| 17 | 2,68 | mF |
| 18 | 2,64 | FF |
| 19 | 2,54 | f |

FF: intensité très forte
F: intensité forte
mF: intensité moyennement forte
m: intensité moyenne
mf: intensité moyennement faible
f: intensité faible
tf: intensité très faible
ttf: intensité très très faible

**Revendications**

1. Nouvel orthophosphate de sodium de rapport Na/P sensiblement égal à 5/3, caractérisé par le fait qu'il présente une seule phase cristalline de spectre de rayons X mesuré par diffractométrie par réflexion.

| No raie | dÅ |
|---|---|
| 1 | 8,9 |
| 2 | 5,35 |
| 3 | 4,68 |
| 4 | 4,63 |
| 5 | 3,85 |
| 6 | 3,81 |
| 7 | 3,75 |
| 8 | 3,67 |
| 9 | 3,66 |
| 10 | 3,33 |
| 11 | 3,28 |
| 12 | 3,38 |
| 13 | 3,15 |
| 14 | 2,77 |
| 15 | 2,72 |
| 16 | 2,71 |
| 17 | 2,68 |
| 18 | 2,64 |
| 19 | 2,54 |

2. Procédé pour l'obtention de l'orthophosphate selon la revendication 1, caractérisé par le fait que:

a) l'on prépare une solution d'orthophosphates de sodium mono- et disodique de rapport global Na/P sensiblement égal à 1,667±0,01;

b) l'on forme un écoulement puits-tourbillon avec une phase gazeuse chaude et que l'on impartit à cet écoulement une quantité de mouvement par rapport à la solution d'orthophosphate supérieure d'au moins 100 fois;

c) l'on introduit la solution d'orthophosphates préparée en a dans la zone de dépression de l'écoulement puits-tourbillon, de manière à provoquer la dispersion de ladite solution d'orthophosphates par la phase gazeuse, puis sa cristallisation.

**Patentansprüche**

1. Neues Natriumorthophosphat mit einem Verhältnis Na/P im wesentlichen gleich 5/3, dadurch gekennzeichnet, dass es eine einzige kristal-line Phase und folgendes Rötgenbeugungsspek-trum aufweist: →

2. Verfahren zur Herstellung des Orthophosphats nach Anspruch 1, dadurch gekennzeichnet, dass man

a) eine Lösung aus Mononatriumorthophosphat und Dinatriumorthophosphat mit einem Gesamtverhältnis Na/P von im wesentlichen gleich 1,667±0,01 herstellt;

| Linie | dÅ |
|-------|------|
| 1 | 8,9 |
| 2 | 5,35 |
| 3 | 4,68 |
| 4 | 4,63 |
| 5 | 3,85 |
| 6 | 3,81 |
| 7 | 3,75 |
| 8 | 3,67 |
| 9 | 3,66 |
| 10 | 3,33 |
| 11 | 3,28 |
| 12 | 3,38 |
| 13 | 3,15 |
| 14 | 2,77 |
| 15 | 2,72 |
| 16 | 2,71 |
| 17 | 2,68 |
| 18 | 2,64 |
| 19 | 2,54 |

b) mit einer heissen Gasphase eine Schacht-Wirbelströmung erzeugt und dieser Strömung eine Bewegungsgrösse erteilt, die, bezogen auf die Orthophosphatlösung, um mindestens das 100fache grösser ist;

c) die unter a hergestellte Orthophosphatlösung in die Unterdruckzone der Schacht-Wirbelströmung einführt, so dass die Verteilung der Orthophosphatlösung durch die Gasphase und dann ihre Kristallisation hervorgerufen wird.


**Claims**

1. A novel sodium orthophosphate having a Na/P ratio which is substantially equal to 5/3, characterised in that it has a single crystalline phase with an X-ray spectrum as measured by reflection diffractometry:

| Line No. | dÅ |
|----------|------|
| 1 | 8,9 |
| 2 | 5,35 |
| 3 | 4,68 |
| 4 | 4,63 |
| 5 | 3,85 |
| 6 | 3,81 |
| 7 | 3,75 |
| 8 | 3,67 |
| 9 | 3,66 |
| 10 | 3,33 |
| 11 | 3,28 |
| 12 | 3,38 |
| 13 | 3,15 |
| 14 | 2,77 |
| 15 | 2,72 |
| 16 | 2,71 |
| 17 | 2,68 |
| 18 | 2,64 |
| 19 | 2,54 |

2. A process for producing the orthophosphate according to Claim 1, characterised by:

(a) preparing a solution of monosodium and disodium orthophosphates having an overall Na/P ratio which is substantially equal to $1.667 \pm 0.01$;

(b) forming an axial flow-vortex flow configuration with a hot gaseous phase and imparting to said flow configuration a momentum of more than at least 100 times relative to the orthophosphate solution;

(c) introducing the solution of orthophosphates prepared in step a into the depression region of the axial flow-vortex flow configuration so as to cause dispersion of said solution of orthophosphates by the gaseous phase and then crystallization thereof.